# EUROPEAN PATENT SPECIFICATION

(11) **EP 2 604 870 B1**
(45) Date of publication and mention of the grant of the patent: **18.05.2016**
(21) Application number: 12196344.1
(22) Date of filing: 10.12.2012
(51) Int. Cl.: F16B 19/10, F16B 5/06, B60R 13/02

(54) **An integrated clip**
Integrierter Clip
Pince intégrée

(30) Priority: 12.12.2011 GB 201121231
(43) Date of publication of application: 19.06.2013
(73) Proprietor: Nissan Motor Manufacturing (UK) Ltd., Cranfield Bedfordshire MK43 0DB (GB)
(72) Inventor: Gomez Blanes, Juan Enrique, Barcelona 08040 (ES)

(56) References cited:
- EP-A1- 0 735 285
- DE-U1-202006 013 603
- GB-A- 2 388 150
- US-A- 4 122 583
- US-A1- 2004 181 917

## Description

The present invention relates to an integrated clip, particularly suitable for affixing a first component, with which the clip is integrated, to a second component; to an automotive trim panel incorporating such a clip; and to a vehicle incorporating such a trim panel.

When assembling automobiles, it is common to attach component parts like plastic covers, protectors or air-guides to an engine or the like by use of suitable fasteners. It is also usual to attach plastic or composite panels or sheets over voids formed in metal components, e.g. doors or luggage area side panels, by suitable means. Such components can be held in place by screws, but more often by plastic press-fitting clips that push through aligning holes in both the composite panel component and the supporting metal component. (The composite panel could, for example, be a textile covering on a board or plastic base, as is commonly used in vehicle trim).

Various clip constructions have been proposed for joining two components, such as: US7549829, US2010/0303539, US2003/0129040, US7073230 and US2010/0107376; each of which are one or two piece independent clip constructions variously designed to fit in a round hole. The use of independent clips gives rise to a number of problems, including alignment and colour matching. There is also the matter of additional assembly operations and time, due to the use of additional components. Where several similar clip designs are made for a particular car maker, there is always a risk that different clips will find their way into a single parts delivery, leading to quality and stock-keeping problems. Integrated clips (i.e. clips incorporated into a plastic panel or other component) are known, but these are usually a simple one or two leg arrow shape; where a barb in the arrow holds the panel in place. Integrated clips are designed for disassembly and refitting, but sometimes break after a single disassembly operation, particularly if they are removed carelessly. This can lead to customer dissatisfaction in service. There is therefore a need for a more robust integrated clip.

DE 20 2006 013 603 U1 discloses a clip according to the preamble of claim 1.

The present invention seeks to provide an integrated clip, suitable for attaching a panel or other component in an automotive application, that is simple to use and potentially re-usable if necessary.

In a broad aspect of the invention, there is provided a clip for a component including an opening formed in a surface of the component, the clip comprising a shaft arranged to be located within the opening, wherein the shaft has a head and at least one lever hingedly attached by one end to the shaft; characterized in that the clip is integrated into the component; and in that the clip has three levers, each lever being hingedly connected to the shaft and, in turn, hingedly attached by its other end to one of three legs extending from an edge of the opening; the legs being equally spaced about the opening; and in that the head includes an engagement means for assisting retention of the clip in an engaged state; the engagement means being at least one flange extending from the head or shaft, said flange being able to be received upon engagement by a channel located adjacent to the opening in the component; the channel being located in an underside surface of the component; and in that there are multiple flanges for engagement with a receiving channel on an underside surface of the component.

In a preferred form, prior to use (i.e. prior to engagement of the clipping function), the shaft is suspended within the aperture in the component such that the head is located above the surface of the component and the levers/hinges and legs are located below an opposite surface of the component.

In this context, the terms "above" and "below" refer to a situation where a plane of the component including the clip is placed substantially horizontally. Typically in use, however, the trim panel would be placed upright against a body panel such as a door or a rear wing panel, in which case "above" would mean "on the vehicle interior side of the panel", and "below" would mean "on the vehicle exterior side of the panel".

In use the clip, integrated into a first component, is arranged over a hole formed in a second component such that the clip legs fit within said hole. Subsequently, the head is pressed toward the second component so that the shaft engages the levers to push outwards on the legs to form a construction that is wider than the hole in the second component.

Each lever passes through an over centre condition. This has the effect of reducing the amount of force required to close the clip. A surface of the lever can include a chamfer to accommodate the over centre condition when reaching an engaged state.

The flanges may be manually (or with a suitable tool) disengaged in order to reverse the clipping function and to withdraw the clip from attachment with the second component. In practice, due to the construction of the invention, cheaper materials can be used to mould the integrated clip (e.g. polypropylene or polystyrene) than may otherwise be possible in independent clips according to the prior art. An integrated clip also reduces the number of parts and complexity of assembly.

Each leg may include a formation for engaging a second component. The formation helps to grip the second component. The formation may be located on an opposite side of the leg from that on which the lever is hinged, and is preferably in the form of a protrusion such as a bulge or rib.

An embodiment of the integrated clip of the invention will now be described, by way of example only, with reference to the accompanying drawings, wherein:
Figures 1A to 1E illustrate general and sectional views of an integrated clip in a "free/open state";
Figures 2A to 2E illustrate comparable views to Figures 1A to 1E of the integrated clip in an "engaged state";
Figures 3, 4 and 5 illustrate various detailed views of the integrated clip according to the invention in an "engaged state"; and
Figure 6 illustrates a graph of relative force required to complete the clipping action for the clip of the invention, compared to a conventional clip.

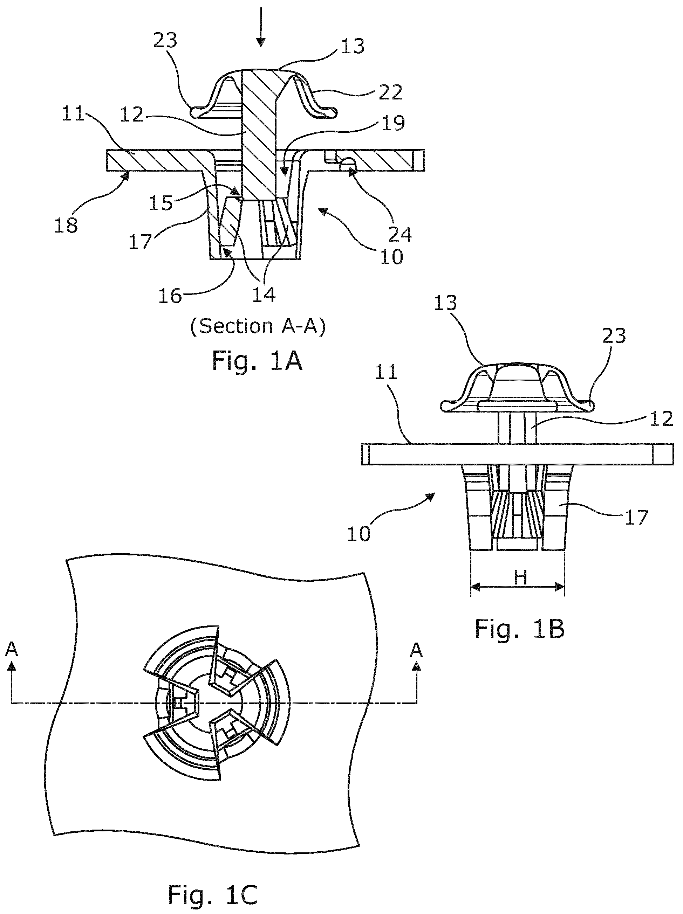

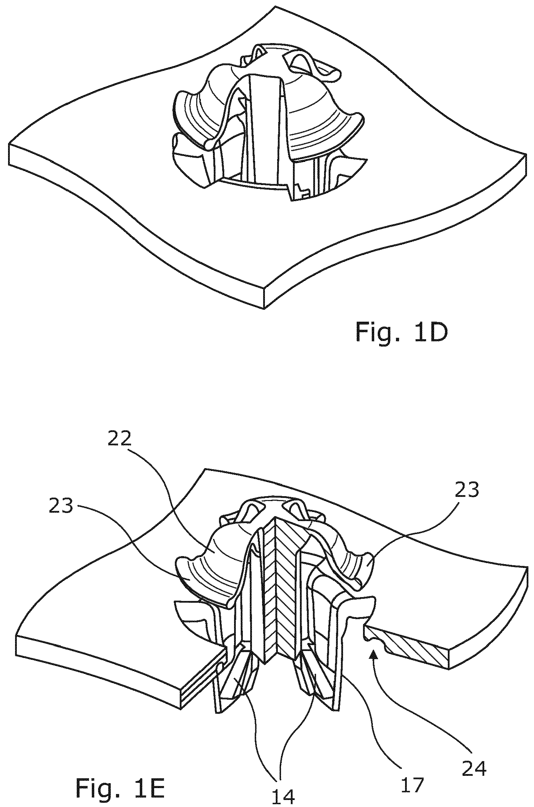

Figures 1A to 1E illustrate the integrated clip of the invention before it is attached to a second component; Figure 1A being a sectional view along line A-A in Figure 1C. In the illustrated embodiment, a clip 10 is formed (e.g. by injection moulding) into the surface of a panel 11; however, the component with which the clip is integrated could be any suitable construction, e.g. a protective cover, or a decorative trim strip.

Figures 1A and 1B best show a central shaft 12 that extends between the two main operative parts of the clip; namely, a head 13, and a plurality of levers 14. Each lever 14 is hingedly attached to the shaft 12 at one end 15; and is also attached by a hinge at a second end 16 to a leg 17 that extends from an underside surface 18 of the panel 11. In this way, the downwardly extending legs 17 and lever 14 "suspend" the shaft 12 centrally in an opening 19 formed through panel 11.

It will be noted that legs 17 extend downwardly at the edge of opening 19; either coaxially, or with a slight inward taper relative to a centreline of shaft 12.

Figures 1C to 1E clarify that, in this preferred embodiment, there are three levers/legs appended to shaft 12 equally spaced thereabout, but any suitable number (including one) may be used.

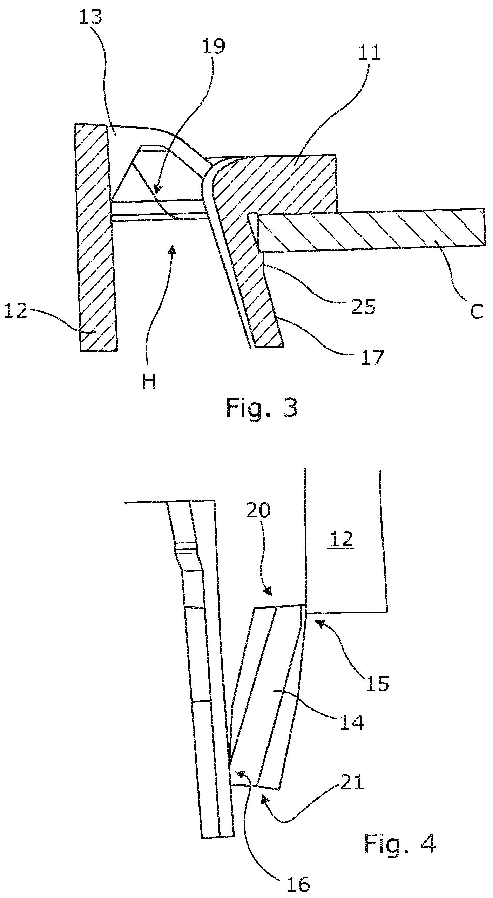

Further detail of the lever/leg attachment to shaft 12 is shown by Figure 4, wherein hinges 15, 16 can be seen as thin plastic connections (from the injection moulding process); although other structures may be possible that can achieve an equivalent hinge movement.

Lever 14 is shaped at each end 20, 21 adjacent to the hinges 15, 16 respectively to have an angle (chamfer) accommodating movement in operation as will be later described.

Referring back to Figures 1A to 1E, the head 13 also includes three extending flanges 22 that will provide an engagement/locking means for the clip in use. Each flange 22 extends from shaft 12 in a downward curve that reverses to terminate in a lip or ridge 23. In use, this structure is received by an undercut channel 24 formed in the underside surface 18 of panel 11. Such use will be described in detail below.

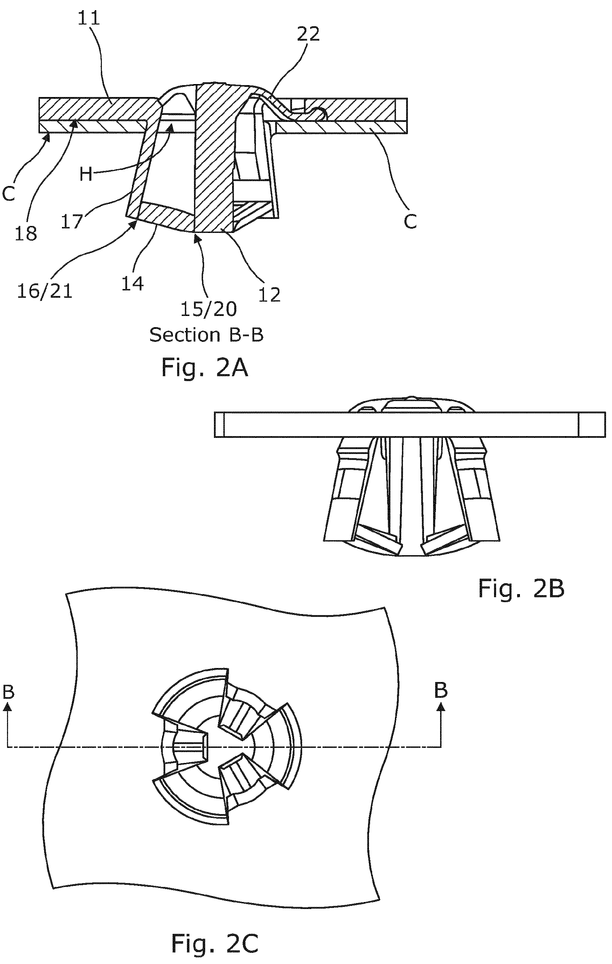

Figures 2A to 2E illustrate the integrated clip 10 of the invention in an engaged state, i.e. securely attached to a second component C within which a suitably sized hole H (preferably circular) has been formed. (Figure 2A being a sectional view along line B-B in Figure 2C). Hole H should be approximately equal in diameter to the widest distance between adjacent legs 17 where they abut/extend from surface 18 as indicated by the dimension H in Figure 1B. In practice, (i.e. for an automotive application) the second component may be a metal construction such as a car door. The hole H would, therefore, be stamped or drilled into the metal surface as needed.

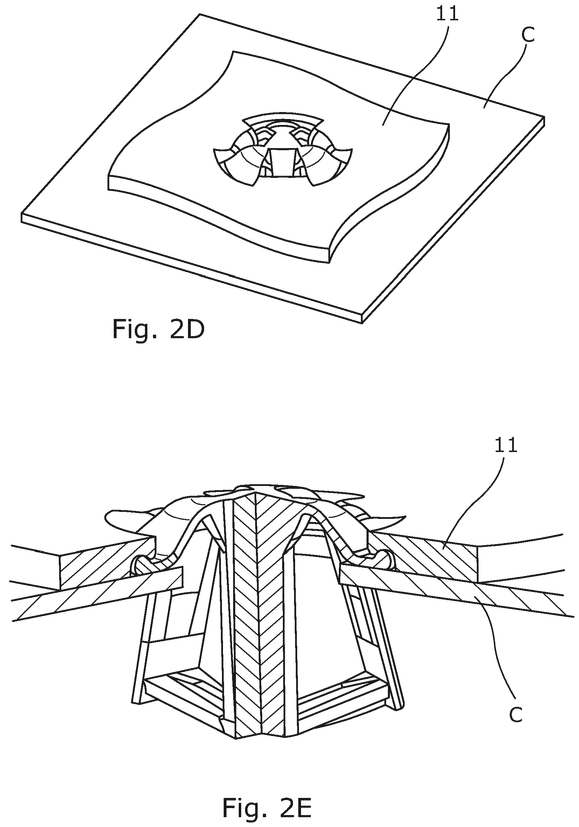

In use, clip 10 is inserted into a hole H of component C until the underside panel surface 18 contacts or is closely facing the upper/outermost surface of component C, best seen in Figures 2A, 2D and 2E. Head 13 is manually pressed to cause shaft 12 to move through opening 19 and aligned hole H against the resistance of hinged lever 14 which in turn is hinged against the resilience of leg 17.

Engagement of clip 10 with component C results in an over-centre or diaphragm effect; where lever 14 pivots at each end under pressure until it reaches a mid stroke position where it is at an angle of 90° to the shaft. Once the clip passes this position, the resilience of the legs 17 assists the corresponding levers 14 to complete the closing action of the clip. According to Figures 2A, 2B, and 2E, the lowermost end of shaft 12 rests below the expanded (splayed out) distal ends of legs 17. It will be clear from Figures 2A, 2B and 2E that the expanded nature of the legs 17 prevents the engaged clip from working loose from hole H of component C. The chamfered surfaces 20/21 of lever 14 accommodate the engaged state as best seen in Figure 2A.

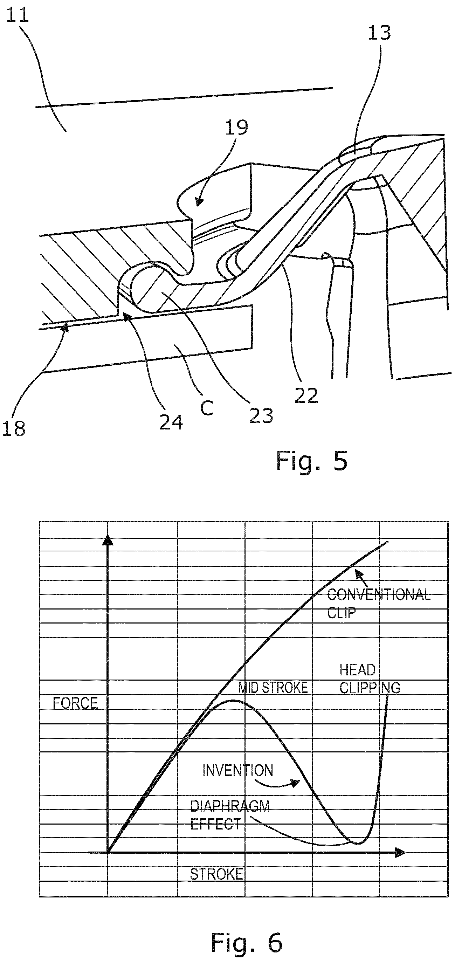

Figure 6 illustrates a representation of insertion force required against length of stroke. Specifically, force is applied until a mid stroke event; where the lever passes over centre, and the required force of a user to close the clip drops off as the clip "springs" into place.

A further locking function is provided by flanges 22 of head 13, which engage into the undercut channel 24 of panel 11 at the same time as the over-centre action is occurring in the lever/leg area.

More specifically, it is apparent from the right side of section view 1A that flange 22 is able to clear the edge of opening 19 when it is pressed downwardly; and upon contacting the surface of component C (Figure 2A), the lip 23 is directed to bend flange 22 toward undercut channel 24.

Detail of the engaged position of lip 23 into undercut 24 is illustrated by Figure 5. The retaining nature of head 13 and flanges 22 prevents the clip from opening during vibration/acceleration etc. It also reduces rattling noises from vibration.

Figure 6 shows that a final forceful push is required at the end of the stroke to lock head 13 in place after the drop off in force due to the over-centre action of levers 14. In any event, the total force required for insertion is not as great as that of a conventional clip.

Figure 3 illustrates detail of a bulge shape 25 that is formed or develops at the root of legs 17. This close contact with the edge of hole H formed in component C combines with the over centre effect of levers 14 and the head lip engagement in undercut 24 to secure the engaged clip in place.

An advantage of the combined locking features of the clip is that - even if the material of the bulge fails - the panel/component 11 should still be held in place, due to the geometry of the lever (i.e. the legs being splayed out in its engaged position).

For disassembly, the clip can be opened by squeezing flanges 22 of head 13 together by hand or by use of a suitable tool. The over centre position of levers 14 can be reversed once the head is disengaged. If the legs of the clip are accessible then squeezing these (or pushing up shaft 12) can also aid removal of the clip. However, in many cases the legs/levers are not accessible as they are hidden behind the second component. It should be possible to reuse the clip/component several times, so long as there is no major structural damage to the legs/levers and hinges caused during use; or during removal of the clip from the hole.

It is intended to injection mould the integrated clip from polypropylene or other suitable plastics, which are cheaper than other common materials for plastic clips used in vehicle body parts, such as polyamide or polyacetal. Usually polypropylene would not possess sufficient strength in an automotive application, but the combined locking features of an integrated clip such as the invention overcome any apparent weakness.

## Claims

1. A clip (10) for a component (11) including an opening (19) formed in a surface of the component, the clip comprising a shaft (12) arranged to be located within the opening, wherein the shaft (12) has a head (13) and at least one lever (14) hingedly attached by one end (20) to the shaft;
**characterized in that**:
the clip (10) is integrated into the component (11) ;
and **in that** the clip has three levers (14), each lever (14) being hingedly connected to the shaft (12) and, in turn, hingedly attached by its other end (21) to one of three legs (17) extending from an edge of the opening (19); the legs (17) being equally spaced about the opening (19);
and **in that** the head (13) includes an engagement means (22, 23) for assisting retention of the clip in an engaged state; the engagement means being at least one flange (22) extending from the head (13) or shaft (12), said flange (22) being able to be received upon engagement by a channel (24) located adjacent to the opening (19) in the component; the channel (24) being located in an underside surface (18) of the component (11) ;
and **in that** there are multiple flanges (22) for engagement with a receiving channel (24) on an underside surface (18) of the component (11).

2. The integrated clip (10) of claim 1, wherein the shaft (12) is suspended within the opening (19) in the component (11) by the legs (17) and levers (14) such that, in an open state, the head (13) is located above the opening (19); and the levers (14), hinges (15, 16), and legs (17) are located below the opening.

3. The integrated clip (10) of claim 1 or claim 2, wherein the engagement means (22, 23) is disengageable.

4. The integrated clip (10) of any one of the preceding claims, wherein in use, the head (13) is pressed to, via the shaft, engage the hinged levers (14) to impart an outward force on the legs (17) to form a construction that is wider than the opening (19) in an engaged state.

5. The integrated clip (10) of claim 4, wherein the levers (14) are arranged to pass through an over centre condition.

6. The integrated clip (10) of claim 5, wherein a surface (20, 21) of each lever (14) includes a chamfer to accommodate the over centre condition when reaching an engaged state.

7. The integrated clip (10) of any one of the preceding claims, wherein each leg (17) includes a formation (25) for engaging a second component (C).

8. An automotive trim panel (11) incorporating an integrated clip (10) according to any preceding claim.

9. A vehicle incorporating a trim panel (11) according to claim 8.

## Patentansprüche

1. Clip (10) für eine Komponente (11), eine Öffnung (19) beinhaltend, die in einer Oberfläche der Komponente gebildet ist, wobei der Clip einen Schaft (12) umfasst, der dafür angeordnet ist, sich in der Öffnung zu befinden, wobei der Schaft (12) einen Kopf (13) und mindestens einen Hebel (14) aufweist, der mit einem Ende (20) gelenkig am Schaft angebracht ist,
**dadurch gekennzeichnet, dass**:
der Clip (10) in die Komponente (11) integriert ist,
und dadurch, dass der Clip drei Hebel (14) aufweist, wobei jeder Hebel (14) gelenkig mit dem Schaft (12) verbunden ist und mit seinem anderen Ende (21) wiederum gelenkig an einem von drei Schenkeln (17) angebracht ist, die sich von einem Rand der Öffnung (19) aus erstrecken, wobei die Schenkel (17) um die Öffnung (19) herum gleich beabstandet sind,
und dadurch, dass der Kopf (13) ein Eingriffsmittel (22, 23) beinhaltet, um das Halten des Clips in einem Eingriffszustand zu unterstützen, wobei die Eingriffsmittel mindestens ein Flansch (22) sind, der sich vom Kopf (13) oder Schaft (12) aus erstreckt, wobei der Flansch (22) nach dem Eingreifen von einem Kanal (24) aufgenommen werden kann, der sich angrenzend an die Öffnung (19) in der Komponente befindet, wobei sich der Kanal (24) an einer Unterseitenfläche (18) der Komponente (11) befindet,
und dadurch, dass mehrere Flansche (22) für einen Eingriff mit einem Aufnahmekanal (24) an einer Unterseitenfläche (18) der Komponente (11) vorhanden sind.

2. Integrierter Clip (10) nach Anspruch 1, wobei der Schaft (12) durch die Schenkel (17) und die Hebel (14) derart in der Öffnung (19) in der Komponente (11) aufgehängt ist, dass sich in einem offenen Zustand der Kopf (13) über der Öffnung (19) befindet und sich die Hebel (14), Gelenke (15, 16) und Schenkel (17) unter der Öffnung befinden.

3. Integrierter Clip (10) nach Anspruch 1 oder Anspruch 2, wobei das Eingriffsmittel (22, 23) lösbar ist.

4. Integrierter Clip (10) nach einem der vorhergehenden Ansprüche, wobei der Kopf (13) während des Gebrauchs gedrückt wird, um mittels des Schafts mit den angelenkten Hebeln (14) in Eingriff zu gelangen, um auf die Schenkel (17) eine auswärts gerichtete Kraft auszuüben, um eine Konstruktion zu bilden, die in einem Eingriffszustand breiter als die Öffnung (19) ist.

5. Integrierter Clip (10) nach Anspruch 4, wobei die Hebel (14) dafür angeordnet sind, einen Kippzustand (Over-Center-Zustand) zu durchlaufen.

6. Integrierter Clip (10) nach Anspruch 5, wobei eine Oberfläche (20, 21) jedes Hebels (14) eine Schräge beinhaltet, um den Kippzustand aufzunehmen, wenn ein Eingriffszustand erreicht ist.

7. Integrierter Clip (10) nach einem der vorhergehenden Ansprüche, wobei jeder Schenkel (17) einen Ansatz (25) für den Eingriff mit einer zweiten Komponente (C) beinhaltet.

8. Kraftfahrzeug-Innenverkleidung (11), die einen integrierten Clip (10) nach einem der vorhergehenden Ansprüche enthält.

9. Fahrzeug, das eine Innenverkleidung (11) nach Anspruch 8 enthält.

## Revendications

1. Pince (10) pour un composant (11) comportant une ouverture (19) formée dans une surface du composant, la pince comprenant une tige (12) agencée pour être située au sein de l'ouverture, la tige (12) ayant une tête (13) et au moins un levier (14) fixé de façon articulée par une extrémité (20) à la tige ;
**caractérisée en ce que** :
la pince (10) est intégrée dans le composant (11) ;
et **en ce que** la pince a trois leviers (14), chaque levier (14) étant raccordé de façon articulée à la tige (12) et, à son tour fixé de façon articulée par son autre extrémité (21) à l'une des trois pattes (17) partant d'un bord de l'ouverture (19) ; les pattes (17) étant situées à équidistance autour de l'ouverture (19) ;
et **en ce que** la tête (13) comporte un moyen d'enclenchement (22, 23) pour aider à retenir la pince dans un état enclenché ; le moyen d'enclenchement étant au moins une bride (22) partant de la tête (13) ou de la tige (12), ladite bride (22) pouvant être reçue lors d'un enclenchement par un canal (24) situé adjacent à l'ouverture (19) dans le composant ; le canal (24) étant situé dans une surface de dessous (18) du composant (11) ;
et **en ce qu'**il y a de multiples brides (22) pour un enclenchement avec un canal de réception (24) sur une surface de dessous (18) du composant (11).

2. Pince intégrée (10) selon la revendication 1, dans laquelle la tige (12) est suspendue au sein de l'ouverture (19) dans le composant (11) par les pattes (17) et les leviers (14) de sorte que, dans un état ouvert, la tête (13) soit située au-dessus de l'ouverture (19) ; et que les leviers (14), les articulations (15, 16) et les pattes (17) soient situés en dessous de l'ouverture.

3. Pince intégrée (10) selon la revendication 1 ou la revendication 2, dans laquelle le moyen d'enclenchement (22, 23) est désenclenchable.

4. Pince intégrée (10) selon l'une quelconque des revendications précédentes, dans laquelle en utilisation, la tête (13) est pressée pour, via la tige, enclencher les leviers articulés (14) afin de communiquer une force vers l'extérieur sur les pattes (17) pour former une construction qui est plus large que l'ouverture (19) dans un état enclenché.

5. Pince intégrée (10) selon la revendication 4, dans laquelle les leviers (14) sont agencés pour passer à travers une condition de décentrage.

6. Pince intégrée (10) selon la revendication 5, dans laquelle une surface (20, 21) de chaque levier (14) comporte un chanfrein pour permettre la condition de décentrage lorsqu'un état enclenché est atteint.

7. Pince intégrée (10) selon l'une quelconque des revendications précédentes, dans laquelle chaque patte (17) comporte une formation (25) pour enclencher un second composant (C).

8. Panneau de garniture automobile (11) incorporant une pince intégrée (10) selon l'une quelconque des revendications précédentes.

9. Véhicule incorporant un panneau de garniture (11) selon la revendication 8.
